(19) Europäisches Patentamt

European Patent Office

Office européen des brevets

(11) **EP 1 223 776 A1**

(12) **EUROPEAN PATENT APPLICATION**

(43) Date of publication:
**17.07.2002 Bulletin 2002/29**

(51) Int Cl.⁷: $H04Q\ 7/38$, H04L 12/28

(21) Application number: **01830012.9**

(22) Date of filing: **12.01.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicants:
• **Siemens Information and Communication Networks S.p.A.**
  **20126 Milano (IT)**
• **SIEMENS AKTIENGESELLSCHAFT**
  **80333 München (DE)**

(72) Inventors:
• **De Benedittis, Rosella**
  **20020 Barbaiana di Lainate (IT)**
• **Bahrenburg, Stefan**
  **28832 Achim (DE)**

(54) **A collision free access scheduling in cellular TDMA-CDMA networks**

(57)     A collision free access method is disclosed for scheduling the access of mobile stations to cellular network having an air interface built in TDMA-CDMA technique where the access procedure is performed on two steps: in the first the mobile station sends a signature for getting the network acknowledgement and the second step is for transmitting the RACH message and the RACH message can be of variable size.

The proposed method allows for a multimode operation of the cellular network where the different modes allow for different RACH message sizes based on the fact that the mobile stations adapt the values of the parameters which control the access procedure based on the parameter values of the RACH message they are requested to send according to the supported mode.

**Figure 12: Example of sub-frames occupancy for configuration 5 in 3GPP**

| sub-frame Number | 0 | 1 | 2 | 3 | 4 | 5 | 6 | 7 | 8 | 9 |
|---|---|---|---|---|---|---|---|---|---|---|
| Users sending on UpPCH | 1 2 3 | | | | 4 5 | | | | | |
| Acknowledged user | | 1 | 2 | 3 | | 4 | 5 | | | |
| User sending RACH | | | 1 | 1 | 2 | 2 | 4 | 4 | 5 | 5 |

EP 1 223 776 A1

**Description**

**FIELD OF THE INVENTION**

The present invention is referred to the field of 3rd Generation (3G) cellular systems and more precisely to a collision free access scheduling in cellular TDMA-CDMA networks.

**BACKGROUND ART**

A problem emerging in the above technical field is how to manage the transition towards the future UMTS (Universal Mobile Telecommunication System) 3rd generation cellular systems. A few years is an optimistic period of time foreseeable taken for these systems to replace the existing ones. In the meanwhile the manufactures are searching hybrid solutions able to anticipate some technical features of the future systems without leaving the existent infrastructures. The Applicant of the present patent application has been concerned in a joint development with CATT of a cellular system exploiting a Radio Access Technology named TD-SCDMA (Time Division - Synchronous Code Division Multiple Access). This technology is foreseen to be used for two standards. One of them is specified by the Chinese standardisation organisation CWTS (Chinese Wireless Telecommunication Systems) and the other one is a 3GPP standard, denoted as low chip-rate TDD (Time Division Duplexing) option, or 1.28 Mcps TDD. The system specified by the CWTS is based on GSM (Global System for Mobile communications) protocol stacks, and is in the latter referred to as TD-SCDMA&GSM, described in specifications named TSM. While the 3GPP standard is based on UTRAN (UMTS Terrestrial Radio Access Network) concepts, and is in the latter referred to as TD-SCDMA&UTRAN. A smooth migration between the TD-SCDMA&GSM and TD-SCDMA&UTRAN products has to be ensured, i.e. it shall be possible to use a TD-SCDMA&GSM terminal later on in a TD-SCDMA&UTRAN system for a certain transition period. In an early phase, systems like TD-SCDMA&GSM will be connected to a 2G (2nd Generation) core Network. The physical layers of TD-SCDMA&GSM (standardised by CWTS) and TD-SCDMA&UTRAN (standardised by 3GPP) will be the same. Products for the TD-SCDMA&GSM standard are foreseen to hit the market earlier than TDSCDMA&UTRAN. Products for the TD-SCDMA&UTRAN standard will be available much later. While in later future only TD-SCDMA&UTRAN products are foreseen to be used. There will be a transition period in which both system need to coexist on the same frequency spectrum. To allow a smooth migration from TD-SCDMA&GSM to TD-SCDMA&UTRAN it has to be possible, to use TD-SCDMA&GSM terminals in the TD-SCDMA&UTRAN system, at least for some period of time.

The problem of smooth migration outlines the need of a certain degree of compatibility between the two standards.

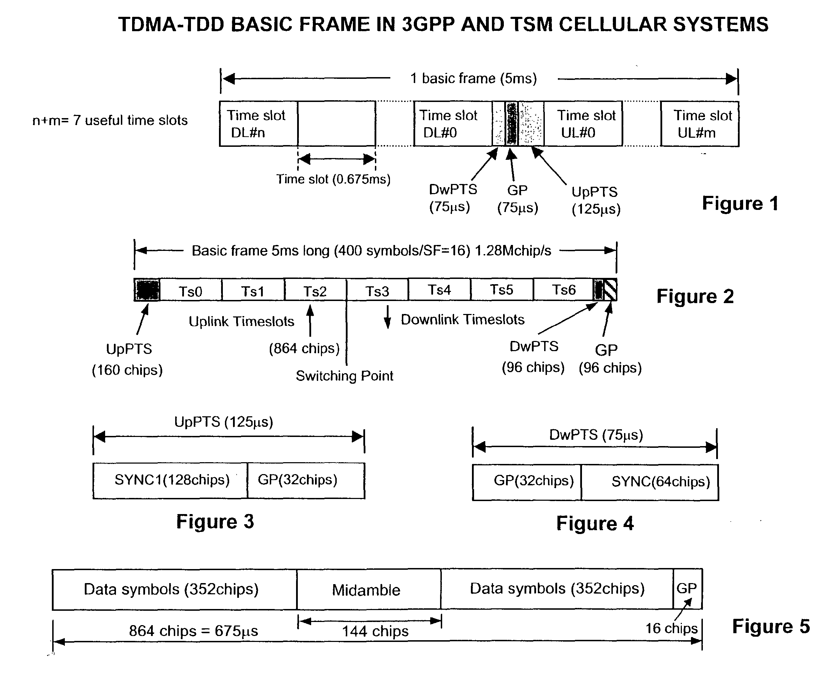

**Figure 1** shows the physical TDMA-TDD basic frame common to the TSM and 3GPP standards. The frame has a sequential organisation of 7 time intervals, or time slots, in addition to other three special time slots, which shall be described afterwards. The basic frame is indefinitely repeated for the use of a generic carrier among those in use in a cell. The basic frame of Figure 1 includes m time slot UL#0, ..., UL#m (UpLink) coming from the Mobile Stations (MS) or the User Equipment (UE) and n time slot DL#n, ..., DL#0 (DownLink) coming from a Base Station (BTSC), being a full-duplexing of TDD type implemented.

By adding the CDMA capability to the TDMA-TDD basic frame of Figure 1, the resulting set consisting of a carrier, a time slot of utilization of the carrier, and a spreading code forms a physical channel of the radio interface reserved to support an information characterizing the channel from the logic point of view. Although not shown in the Figures, the sequential frames are organized in more hierarchical levels observed by all the carriers used in the TSM and 3GPP systems. For instance it is possible for signalling opportunity to consider two consecutive basic frames of Figure 1 as two sub-frames of a new frame having double duration, belonging to a multiframe of 72 new frames having 720 ms total duration.

The carriers transmitted by a BTSC transport reciprocally synchronised frames, thus simplifying the synchronization between adjacent cells. Without setting limits to the present invention, it is convenient to make a general frame synchronization among all the cells of the different clusters. Starting in the Figure from top to bottom, we see that the basic frame includes n + m = 7 useful time slots, each one having 0,675 ms duration, in addition to other three special time slots, which are in order: a DwPTS time slot (Downlink Pilot Time Slot) of the duration of 75 μs, a 75 μs guard time GP, and a UpPTS time slot (Uplink Pilot Time Slot) of 125 μs duration. The total duration of the basic frame is 5 ms. In the basic frame the guard period GP represents the switching point DL/UL. The guard period GP is used to avoid interference between uplink and downlink transmissions, as well as to absorb the propagation delays between the Mobile Station and the base station when the first one sends the first signal on the UpPTS channel; at this stage in fact the propagation delay is not yet known. Immediately before the guard period GP there is the special DwPTS time slot and immediately after the UpPTS time slot, both contain synchronization bursts not subject to spreading code. The remaining time slots contain bursts having a same structure, subject to spreading code, and destined to traffic or signalling. **Figure 2,** shows a possible organization of the basic frame having high symmetry and particularly with starting point in UpPTS, followed by three uplink time slots, indicated in order Ts0, Ts1 and Ts2, then by four downlink time slots Ts3, Ts4, Ts5 and Ts6, and finally by DwPTS and by the guard time GP. Between time slots Ts2 and Ts3, there is the switching point UL/DL. In Figure 2 the duration of the different useful time slots is expressed through a measurement unit called chip, of the duration of 0,78125 μs, equal to the reciprocal of a chiprate = 1,28 Mcps corresponding to the common frequency of a set of N sequences of codes used in a useful time slot to perform the spread spectrum according to the CDMA technique. **Figure 3** shows that the uplink pilot time slot UpPTS includes a 128-chip SYNC1 sequence followed by a 32-chip guard period GP. **Figure 4** shows that the downlink pilot time slot DwPTS includes a 32-chip guard period GP followed by a 64-chip SYNC sequence. And finally **Figure 5** shows that the common structure of useful time slots Ts0, ..., Ts6 includes two fields having equal length of 352 chips for data, placed respectively before and after a 144-chip midamble, with a 16 chip guard period GP at closing, for a total of 864 chips. Each one of the two fields given in **Figure 5** is modulated by a pre-set number of sequence codes to generate an equal number of radio channels in the band of the spread spectrum, which individually occupy the whole band and represent a same number of so-called resource units RU (Resource Unit) put at disposal of the service and of the signalling. The midamble on its turn includes a training sequence used by the BTSC station and by the Mobile Stations to evaluate the impulse responses of the number of radio channels generated, for the purposes mentioned later on. With reference to the main burst of **Figure 5** the following relation applies: $T_s^k = Q_k \times T_c$, where $Q_k$ is a spreading factor SF (Spreading Factor), freely selected among 1, 2, 4, 8, and 16, corresponding to said number N of code sequences; $T_s$ is the duration of a transmitted symbol, and $T_c$ is the fix duration of the chip. From the relation it can be noticed that increasing the spreading factor also the duration of symbols transmitted increases, in other words, the physical channels associated to the main burst increase, but the transmission speeds allowed on the same decrease.

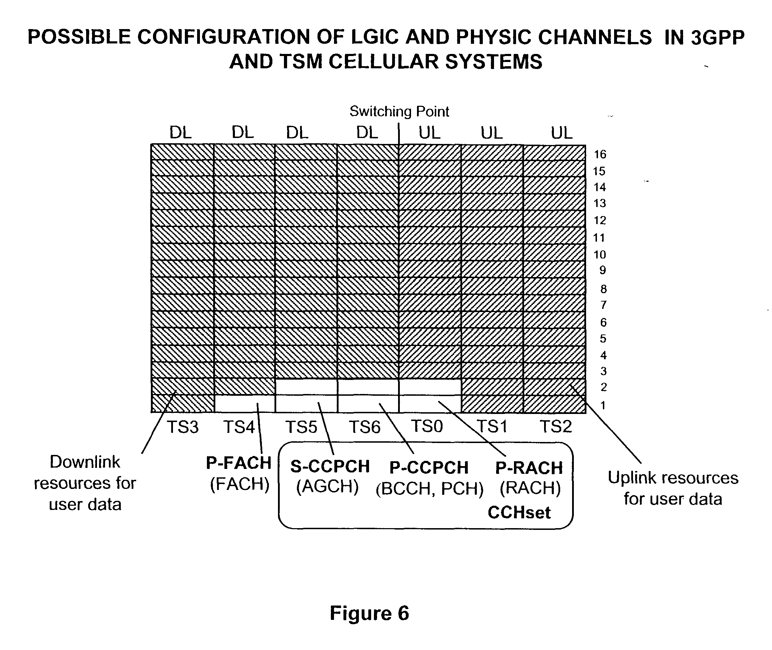

**Figure 6** shows the effect of a spreading factor 16 to create 16 new physical channels associated to each useful time slot belonging to the 5 ms basic frame of Figure 1. The broadcast system information shall contain a trace of the association of the logical channel with the physical channels prefixed by P. The control channels considered in Figure represent an allocation set called CCHset (Control CHannel Set). In the TSM and 3GPP systems more than one CCHset can be configured. **Figure 6** shows a possible layout of a CCHset and of a P-FACH channel within the basic frame.

Relatively to the transparent use by the network of the BCH (Broadcast CHannel) channels directed to the TSM and 3GPP Mobiles, each other distinct, this possibility is described in the European patent application No. 00830552.6, filed in both the name of Siemens Information and Communication Network S.p.A. and Siemens Aktiengesellschaft. The claimed solution exploits the QPSK modulation of the received DwPTS (Downlink Pilot Timeslot) for signalling the contents of the current frame. The combinations of the phases 45°, 135°, 225° and 315° are used to indicate the position of the BCH and the interleaving frame number relative to a fix phase reference. In other words BCH channels of two standards, like TMS and 3GPP, can be time multiplexed on the physical channel P-CCPCH (Primary Common Control Physical Channel) and the two types of UEs (User Equipment) independently demultiplex the proper BCH. The advantage is due to the coexistence of two different Mobile systems using the same frequency band without impacting the two standards.

Inventive solutions connected to the transparent use of BCH channels are undoubtedly important, because those channels carry the system information for cells, from which the subsequent operation completely depends. Research and development carried out in the laboratories of the Applicant made possible to wide exploit the BCH channel in 3GPP systems. Consequently some other procedure have to be considered as far as concerns the compatibility between the two standards. For example, taking into account that the Mobile identity, and therefore the supported TSM or 3GPP mode, can be known by the network only when the Mobile has already accessed to it is clear that all the procedures and messages exchanged before that time should be kept the same, at least at the network side. One of these procedures, named Random Access procedure, or RACH procedure, allows a Mobile to access to the system by means of co-ordinate exchanged messages. The RACH procedure is substantially completed in two steps involving two different access from the Mobile to the network. A first step is charged to randomly transmit signatures, or SYNC1 bursts, from the Mobile Station and accept the reply from the network with a single burst message, which allows the correct setting in the Mobile of its timing and power level for the next transmissions. This message is named respectively FPACH (Fast Physical Access CHannel) in TD-SCDMA&UTRAN specifications, or PFACH (Physical Forward Access CHannel) in the TD-SCDMA&GSM specifications. During the second step of the RACH procedure the Mobile transmits a RACH message to the network to make know its identity at the aim of accessing to a network service (e.g. asking for a channel).

In both steps of the RACH procedure regarding a cellular system TDMA-SCDMA-TDD, like 3GPP, the Applicant filed other patent applications to outline the opportunity to exploit system information broadcast in the BCH channel. Relevant arguments concerning the first step are disclosed in the International patent application PCT/IT00/00101.

The characteristic part of the claim 1 of the disclosed access channel scheduling process, cites testually:

   a) reading made by the Mobile Stations of appropriate access parameters (P1, P2, P3) inserted by the network in the system information carried by the above-mentioned service channel (BCCH) or in messages transmitted by the network at starting of procedures for the assignment of dedicated channels (TCH, SACCH, FACCH) to the Mobile Stations requesting at least an access of the Mobile Stations to the network;

b) generating by the Mobile Stations of the shared access subchannels ($UpPTS_{SUBCH}$) of said shared access channel (UpPTS), associating each subchannel to an access typology, through the use of said access parameters (P1, P2, P3);

c) transmission of one said identification sequence (SYNC1), or signature sequence, on one said shared access subchannel ($UpPTS_{SUBCH}$).

The shared access channels mentioned at step b) are obviously the Uplink Pilot Time Slots UpPTS. The scheduling process need at least two broadcast access parameters P1 and P2 that the Mobile Stations introduce in the following formal expression: SFN module [P1] = P2 calculated by the Mobiles to mark the frames numbered with the system frame number SFN as belonging to one said subchannel ($UpPTS_{SUBCH}$). The introduction of subchannels dedicated to the different access typologies, confers a CDMA system the capability to regulate the access of the Mobile Stations on the shared channel. It is thus attenuated the risk to congest the uplink path in the peaks of connection requests to the network, concerning all the modes foreseen by the system, such as for instance: in originated call, in ended call, in the asynchronous intercell handover, etc.

As far as concerns both the first and second step of the RACH procedure, the German patent application No 100 08 653.5 in the name of Siemens AG, outlines the opportunity to insert inside the system information carried from the BCH channel the associations of the following three channels SYNC1-FPACH-PRACH. A similar association prevent signalling delays due to the systematic reading of the system information from Mobiles to know the right channel for receiving the network reply to a preceding SYNC1, or respectively to a Channel Request. In particular to know which PRACHs have been configured, so that a Mobile can perform the random access procedure without colliding with other Mobiles.

## OUTLINED TECHNICAL PROBLEM

Having defined the Random Access procedure at a general level for introducing the prior art, some more precise information needs to better point out differences between the two modes, namely TSM and 3GPP, when accessing the network. For the TSM standard, the Random Access procedure follows the following steps:

**1.** The network transmits broadcast on the Broadcast Channel (BCH), besides other system information, also the following:

- the configured PFACHs, which are the physical channels from which the network will send its acknowledgements to the detected signatures;
- the configured PRACHs, which are the physical channels on which the Mobile has to send its service request (through the RACH message) after detecting the acknowledgement to a previously sent signature from the FPACH.
- the association between which signatures will be acknowledged by which FPACHs and which PRACH to use for an acknowledgement received by which FPACH; this association allows to optimise the reception and transmission at the Mobile and avoid the collision on the PRACHs.

**2.** The signatures are sent by the Mobiles on the UpPTS physical channel and are given by a sequence of chips of known values; up to 8 different sequences are assigned. The Mobiles get the information of which sequences are in use in a cell through the synchronisation process (see TSM and 3GPP specs for details).

**3.** The Mobile therefore selects a signature among the supported ones, waits for the acknowledgement from the associated FPACH for the next four sub-frames (5 ms) and detected the acknowledgement received by the configured FPACH.

**4.** The Mobile sends its RACH on the PFACH associated PRACH in a single burst (i.e. in 5 ms).

Also for the TD-SCDMA 3GPP standard, the network broadcast on the BCH the configured PRACHs and PFACHs (named FPACHs) and their respective association; the Mobile will start the random access procedure by selecting a signature on the UpPTS physical channel, waits for the acknowledgement and then sends the RACH message on the relevant PRACH (i.e. the PRACH associated to the PFACH from which the acknowledge was received) in a similar way as for TSM. Both for TSM and for 3GPP, the signatures, the UpPTS and the PFACH message are defined exactly the same.

**So then what are the differences?**

The big difference between TSM and 3GPP modes, as far as the Random Access procedure is concerned, is the expected capacity of the RACH message. The RACH message contains, in both modes, the request from the Mobiles to access to the network services; through this message the Mobile declares its identity, and its supported mode, to the accessed system.

While for TSM mode this message requires only 32 bits, for 3GPP mode an average payload of 160 bits seems to be needed, but higher capacity is possible too. From this difference, it comes that if the TSM RACH message can be carried in a single burst, fitting in the 5 ms of one radio sub-frame, onto a single resource unit RU at Spreading Factor (SF) 16, for the 160 bits message of the 3GPP mode two basic resource units, at SF 16 each, or one resource unit at SF 8 for two radio sub-frames spanning 10 ms, can be needed. Of course different combinations are possible too, playing on different SF or time duration value or on both parameters.

Taking into account that a dual mode cell will have one set of signatures only and one UpPTS channel only, it comes that all accessing Mobiles, whatever their mode be, will send the same signatures on the same physical channel (the UpPTS) so that the dual mode Base Station will not know at that point in time the mode of the transmitting Mobile and has therefore to reply with the same FPACH acknowledgement message (i.e. having the same content and size).

We have now to consider that one big advantage of the TSM mode is the collision free state for the PRACH channel: when a Mobile accesses to the PRACH for sending its RACH message, no other Mobile should send on that channel at the same time (of course, errors due to bad detection on both sides, Mobile or fixed, are still possible). In TSM mode, the RACH message takes one sub-frame only.

A detailed description of the RACH procedure in TSM mode is part of the relevant published specifications (CWTS TSM technical specifications). As a short summary useful for the disclosure of the technical problem to be solved, the basic points of the TSM RACH procedure are reported hereafter:

1. RACH message takes 1 sub-frame (e.g. 5 ms).
2. RACH message is sent exactly 2 sub-frames after the one carrying the PFACH burst sent as acknowledgement from the network.
3. Sending signatures is allowed at every sub-frame.
4. Sending the acknowledgement to a detected signature is allowed at every sub-frame.
5. The Mobile waits for an acknowledgement for up 4 N sub-frames after the one carrying the sent signature.

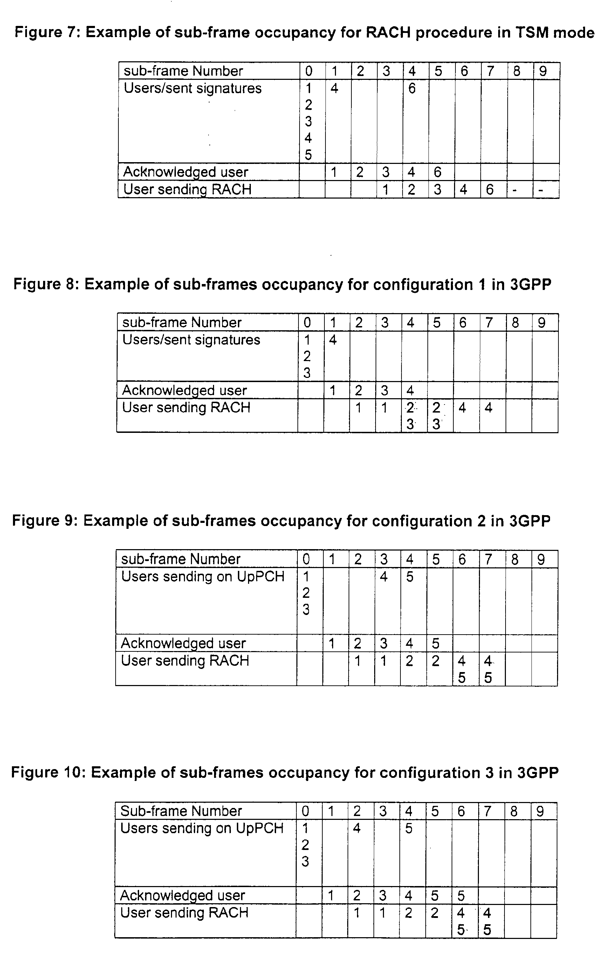

The following reports an example of sub-frames occupancy for the above mentioned exchanged messages. With reference to **Figure 7: Example of sub-frame occupancy for RACH procedure in TSM mode** and for all the following Figures, the different users (1, 2, etc.) correspond to different signatures as well; it is also assumes that the network replies to a detected signature exactly at the following sub-frame, though of course a processing delay in providing the acknowledgement is still possible. As can be seen from this example, no collision happens when sending the RACH message; Note that user 5 will not access the system as not acknowledged by the network in the expected time: i.e. within 4 sub-frames.

In 3GPP standard currently the RACH procedure is still under discussion, though it is quite confirmed that the RACH messages will have bigger size with respect to TSM such that even 2 or 4 sub-frames can be needed.

The aim is to preserve the collision free advantage on the RACH also for 3GPP mode, still keeping the possibility to have a dual mode network able to manage at the same time Mobiles of the two modes. So the designers need to take into account the time duration of the RACH message, as number of sub-frames, on a given physical channel PRACH without changing the network behaviour with respect to the signature detection and the content of the acknowledgement messages. This implies that FPACH acknowledgement burst of 3GPP should be coded and sent in the same way as the PFACH for TSM.

In order to ease the reading of the subsequent text, we introduce the following definitions:

**SFN:** indicates the System Sub-Frame Number broadcast by the network;

**L:** represents the RACH message length in number of sub-frames;

**WT:** represents the Mobile maximum Waiting Time in number of sub-frames to wait for the network acknowledgement;

**M:** represents the maximum frequency in number of sub-frames for sending the signatures SYNC1; such that: a signature can be sent each SFN mod M = 0 (eventually offset with an integer greater than 0, that we will not consider);

**N:** represents the maximum frequency in number of sub-frames for starting to send a RACH message; such that: a new RACH message can be sent at each SFN mod N = 0 (eventually offset with an integer greater than 0 will be ignored as well).

Let's take the following **configuration 1** for 3GPP mode which mostly reproduce the TSM parameters of Figure 1:

**1.** L = 2 (different from TSM);
**2.** N = 2 (as for TSM);
**3.** M = 1 (as for TSM);
**4.** WT = 4 (as for TSM).
**5.** Sending the acknowledgement to a detected signature is allowed at every sub-frame (as for TSM).

Note that condition 4 has to be maintained the same as for TSM, in order to allow the concept of a dual mode network. Or, in another words, the network has to reply exactly with the same message and under the same timing constraints to a detected signature for all the supported modes. With these assumptions, collisions on the PRACH cannot be avoided; as shown in the following example of **Figure 8: Example of sub-frames occupancy for the above configuration 1 in a context 3GPP,** where in gray it is marked the collision of users 2 and 3. Therefore, some of the assumptions above have to be changed.

If we change the WT value from 4 to 2 and keep unchanged the other conditions, we can have the following situation of **Figure 9: Example of sub-frames occupancy for configuration 2 in 3GPP,** where collisions can occur again; in gray it is marked the collision of user 4 and user 5. Note that user 3 will not access as the acknowledgement comes too late.

If we change, with respect to configuration 2 in 3GPP, M value from 1 to 2, we will have the following situation of **Figure 10: Example of sub-frames occupancy for configuration 3 in 3GPP.** Again, user 4 and user 5 collides when sending the RACH message. Note that user 3 will not access as the acknowledgement comes too late.

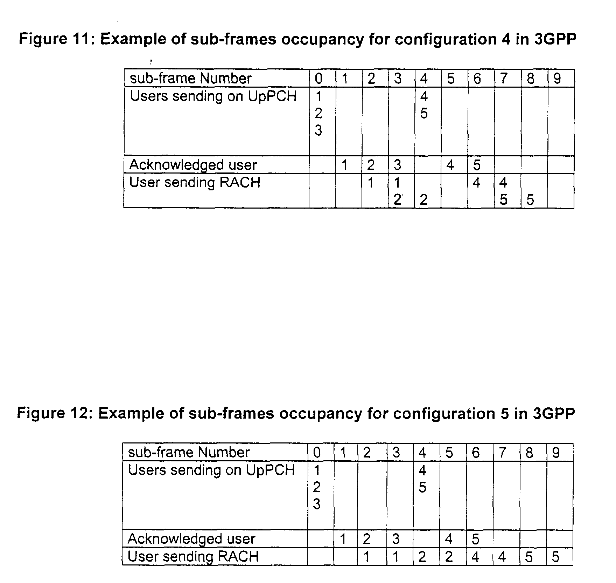

Last example: changing, with respect to configuration 3, the N value from 2 to 1 the situation will be the one of **Figure 11: Example of sub-frames occupancy for configuration 4 in 3GPP.** Again collision can not be avoided and still user 3 will not access as the acknowledgement comes too late.

## PURPOSES OF THE INVENTION

The main purpose of the present invention is that to indicate the rules for the proper setting of the relevant parameters for sending and acknowledging the signatures, so that Mobiles of different modes: e.g. TD-SCDMA&UTRAN, or equivalently 3GPP, and TD-SCDMA&GSM, or equivalently TSM, can access in an efficient way to the same multi-mode network, without collision and the multi-mode network can reply in the expected way to Mobiles of different mode without the need to know in advance their specific type.

The same rules defined by the present invention equivalently apply to a single mode network, where the RACH messages which are sent by the mobile stations of the supported mode can be of variable size.

## SUMMARY AND ADVANTAGES OF THE INVENTION

To achieve said purposes the subject of the present invention is an access scheduling method in a cellular telephony system, as disclosed in claim 1.

## ADVANTAGES OF THE INVENTION

A first advantage of the present invention is the possibility to build a dual mode TD-SCDMA network which is able to allow the simultaneous access of Mobile of other modes with respect to TSM such that the RACH message collision is avoided in both modes, whatever the time duration of the message be.

A second advantage is the possibility to dynamically configure the Random access parameters, like RACH message time duration, frequency for sending signatures and signature acknowledge, waiting time at the Mobile for an acknowledge.

## BRIEF DESCRIPTION OF THE DRAWINGS

The invention together with further objects and advantages thereof, may be understood with reference to the following detailed description of one or more embodiments of the same, taken in conjunction with the accompanying drawings, in which:

- **Figures from 1 to 5** show several representation of a basic radio frame and the included bursts common to a TSM and 3GPP cellular telephony systems;
- **Figure 6** shows a representation of physical and logic channels relevant to a basic frame of Fig.1;
- **Figure 7** is a table indicating the sub-frame occupancy for RACH bursts in TSM mode;
- **Figures from 8 to 11** are several tables indicating as many sub-frame occupancy with RACH bursts for several configuration in 3GPP mode which don't reflect the method of the invention;
- **Figure 12** is a table indicating the sub-frame occupancy for RACH bursts in TSM mode which reflects the method of the invention.

## DETAILED DESCRIPTION OF AN EMBODIMENT OF THE INVENTION

As a conclusion from all the above examples, it comes up that all the involved parameters, described in the above list of the definitions, are tightly related to each other and that the definition of each of them has impacts and put requirements to others if collision on the RACH has to be avoided.

In particular changing the RACH message length, the maximum allowed waiting time should be changed as well keeping unchanged the other parameters or changing the maximum frequency for sending a signature, the RACH message length has to be modified keeping the other parameters unchanged and so on.

The following rules is proposed for defining the values of the relevant parameters such that collision on the RACH can be avoided:

$$L \times WT = M \qquad [1]$$

Equation [1] reports the relation between the RACH message length measured in L sub-frames; the maximum waiting time at the Mobile side for the network acknowledgement to the sent signature measured in WT sub-frames; and the minimum time interval for sending successive signatures measured in M sub-frames. So that for example doubling the RACH message length keeping the same maximum waiting time, requires the doubling of the minimum time intervals between two successive signatures etc.

Note however that the maximum waiting time has to be set within the following range of values:

$$0 < WT \leq integer\ [1/(L-1)] + 1 - (L - N) - (L - M) \qquad [2]$$

If a negative or null value for the WT is obtained, the selected setting of at least one of the other parameters (L; N, or M) has to be changed otherwise the Mobile access will fail (i.e. it will never succeed to get the network acknowledgement). If an infinite value is obtained (as for TSM), it means that any WT value is possible and therefore any M value is possible too; note however that a sensible maximum value for WT is 8, being 8 the maximum number of signatures assigned to a TD-SCDMA cell both TSM and 3GPP.

Equation [1] assumes that the network is able to acknowledge a detected signature immediately the sub-frame after; if this is not the case and for implementation reasons a fixed processing delay (maybe of one sub-frame) has to be considered, this can be taken into account as follows:

Defining D as the number of sub-frames the fixed delay by which the network replies to a detected signature, after resolving all relevant parameters values by applying equations [1] and [2], a new parameter, named WTu (waiting time updated) can be computed as the sum minus 1 of obtained WT and of the processing delay D. If WTu is equal to or less than the obtained RACH message, than the WT to apply will be WTu; otherwise the obtained WT has to be confirmed.

As an example, if we now try to apply equations [1] and [2] to the previously described configuration 3, we can see that equation [1] is not satisfied; therefore one of the 3 parameter values (L, M or WT) has to be changed. If we change M from 2 to 4 the new scenario will be the one reported in **Figure 12: Example of sub-frames occupancy for configuration 5 in 3GPP.**

In the operation:

**1.** The TDMA-CDMA network will broadcast on the relevant BCH the following parameter values, or part of them, or none of them if known or derivable by the mobile stations for each configured PRACH channel:

- RACH message length as L number of sub-frames, or the relative number of bits;
- the maximum Mobile waiting time WT as for example number of sub-frames for the network acknowledgement at the sent signature (SYNC1);

- the maximum frequency for sending a signature, e.g. in number of M sub-frames between two successive signatures;
- when it is allowed to send a RACH message, e.g. at each sub-frame mod N, with N an integer value greater than 0, coming exactly K sub-frames after the signature acknowledgement.

**2.** The Mobile operating in one network supported mode (e.g. 3GPP) can send, at the indicated(/known) sub-frames, the same signatures on the same UpPTS physical channels as a Mobile operating in another network supported mode (e.g. TSM).

**3.** The TDMA-CDMA cell will reply to the detected signatures sending the same acknowledgement messages and with the same timing constraints whatever the accessing Mobile mode be.

**4.** The Mobile will wait up to the indicated(/known) maximum waiting time for signature acknowledgement, and if received in the due time, send on indicated (on the relevant BCH) PRACH, the RACH message starting at the network indicated(known) sub-frames and having the network indicated(/known) length.

**EXTENSIONS ON ACCESS CHANNEL SCHEDULING**

The present invention is susceptible of some extensions beyond the not limiting embodiment described up to now. In particular being the focus of the invention centred on the two step access procedure, in which possible collisions among RACH messages on the assigned PRACH physical channel are avoided thanks to a particular selection of the access parameter values, then it comes up consequently the possibility to exploit the teaching of the invention also in cellular systems built in conformance to different access techniques but also respecting the same two steps access. In particular the invention can be used in the following systems:

- wide band CDMA cellular networks;
- CDMA cellular networks with full-duplex FDD (Frequency Division Duplexing);
- TDMA-CDMA-FDD cellular networks;
- TDMA-CDMA-TDD cellular networks;
- TD-SCDMA-TDD cellular networks.

The description has pointed out an important feature of the invention consisting in the fact that the relevant values of the calculated access parameters like WT, N, M, strong depend from the length of the RACH message. Before in the description the length L is supposed to be variable and not yet well defined since now. This is not a drawback but a good hint to emphasise the opportunity to carry out a single mode cellular system in which mobiles calculate from themselves the access parameters on the basis of known different lengths L of the RACH message. The consequent great advantage is the freedom in operation, being unnecessary the decoding of BCH information concerning the access parameters. This feature can also be maintained in multiple mode networks, where the Mobiles responding to modes that don't exploit this features can advantageously decode the relevant access parameters from the BCH information.

**Claims**

**1.**  An access channel scheduling method in a cellular telephony system based on the so-called CDMA technique by which individual coding sequences each to other orthogonal are respectively assigned to the Mobile Stations for spread-spectrum modulating a common carrier in uplink, and de-spreading demodulating the downlink carrier, in order to make them distinguishable at the air interface; the system adopting a two step procedure for managing the Mobile Stations' network access, where:

- in a first step Mobile Stations send to the network on first configured physical channels respective signature bursts (SYNC1) selected among a plurality of coding sequences each to other orthogonal, and waits a time interval for the acknowledge messages from the network coming on second configured physical channels (PFACH) directly or indirectly correlated to the first;
- in a second step the Mobile Stations, after reception of the acknowledge messages, send to the network respective access request messages (RACH) on third configured physical channels (PRACH) directly or indirectly correlated to the second and/or the first channels;

**characterized in that:**

- an only set of signatures (SYNC1) and an only type of acknowledgement message are assigned into the cell;
- said Mobile Stations calculate first time intervals to send respective signature bursts (SYNC1) and calculate second time intervals to wait up for the arrival of said acknowledge messages from the network; the duration of said first and second calculated time intervals depending on both the duration of said respective access request messages (RACH) and the delays for issuing said request messages, in so avoiding or minimizing collisions on said third configured physical channels (PRACH) among the access request messages (RACH) sent from other Mobile Stations.

2. An access channel scheduling method according to claim 1, **characterized in that** the network send suitable system information in a broadcast channel (BCH) towards said Mobile Stations, the system information include in all, or in part, access parameters like:

- values of said first time intervals for the Mobile Stations have to send their signature bursts (SYNC1),
- values of said second time intervals to stop waiting said acknowledge messages arrivals;
- values of said delays for issuing the access request messages (RACH),
- the durations of said access request messages (RACH);

the Mobile Stations receive the system information and decode their own access parameter values, avoiding or simplifying the calculation thereof.

3. An access channel scheduling method according to claim 1 or 2, **characterized in that** the CDMA system further exploits the so-called TDMA technique by which the carrier is assigned in turn to the Mobile Stations which complete spread-spectrum modulation, and the opposite operation, into a fixed duration of a time slot inserted in a basic sub-frame indefinitely repeated into frames and multiframes having embedded physical channels for transporting logical channels deputed either to traffic or exchange signalling in a multilevel protocol conform to a standardised operative mode; the system adopting a synchronization procedure of the Mobile Stations by means of suitable synchronization bursts inserted in special pilot time slots (DwPTS, UpPTS); the synchronized Mobile Stations know their signature bursts (SYNC1) and the position of uplink pilot time slot (UpPTS) carrying them, further are known the associations between signature bursts (SYNC1) and position of the second configured physical channels (PFACH) carrying the acknowledge messages from the network, and the association of the latter channel with position of the third physical channels (PRACH) for sending the access request messages (PRACH) having duration of a sub-frame or integer multiple.

4. An access channel scheduling method according to claim 3, **characterized in that** assuming the following access parameter assignment:

- access message (RACH) length, as **L** number of sub-frames or the relative number of bits;
- maximum Mobile Station waiting time, as **WT** sub-frames for the network acknowledgement at the sent signature (SYNC1);
- maximum frequency for sending a signature (SYNC1), in number of **M** sub-frames between two successive signatures;
- maximum frequency in number of sub-frames for starting to send an access message (RACH) after the signature acknowledgement, such that: a new access message can be sent at each sub-frame mod **N**, with N an integer value greater than zero, then

the values of the access parameters fit the following mathematical relations:

$$L \times WT = M \qquad [1]$$

on condition that the network be able to acknowledge a detected signature (SYNC1) immediately the sub-frame after; and the maximum waiting time WT has to be set within the following range of values:

$$0 < WT \leq \text{integer} \ [1/(L\text{-}1)] + 1 - (L - N) - (L - M) \qquad [2]$$

if a negative or null value for the WT is obtained, the selected setting of at least one of the other parameters **L, N, M** is changed to allow to get the network acknowledgement.

5. An access channel scheduling method according to claim 4, **characterized in that** the following additional steps are included:

   - defining **D** as the number of sub-frames equal to the fixed delay by which the network acknowledges to a detected signature;
   - defining **WTu** the waiting time **WT** updated;
   - resolving all relevant access parameters values by applying equations **[1]** and **[2];**
   - executing the expression:

$$WTu = WT + D - 1 \qquad [3];$$

   - executing the comparison

$$WTu \le L \qquad [4];$$

   - if condition **[4]** is true **WTu** is taken;
   - if condition **[4]** is false **WT** is confirmed.

6. An access channel scheduling method according to one of the preceding claims, **characterized in that** the network is able to support additional standardised operative mode for servicing, after the access be completed, as many set of Mobiles Stations sharing the same sub-frames, frames and multiframes; the network broadcasting system information through logical channels (BCH) assigned one-to-one at the operative modes, and each additional set of Mobiles Stations selects the proper channel (BCH) for receiving its own system information and decoding the access parameter values.

# TDMA-TDD BASIC FRAME IN 3GPP AND TSM CELLULAR SYSTEMS

Figure 1

Figure 2

Figure 3

Figure 4

Figure 5

EP 1 223 776 A1

# POSSIBLE CONFIGURATION OF LGIC AND PHYSIC CHANNELS IN 3GPP AND TSM CELLULAR SYSTEMS

Figure 6

EP 1 223 776 A1

**Figure 7: Example of sub-frame occupancy for RACH procedure in TSM mode**

| sub-frame Number | 0 | 1 | 2 | 3 | 4 | 5 | 6 | 7 | 8 | 9 |
|---|---|---|---|---|---|---|---|---|---|---|
| Users/sent signatures | 1 2 3 4 5 | 4 | | | 6 | | | | | |
| Acknowledged user | | 1 | 2 | 3 | 4 | 6 | | | | |
| User sending RACH | | | | 1 | 2 | 3 | 4 | 6 | - | - |

**Figure 8: Example of sub-frames occupancy for configuration 1 in 3GPP**

| sub-frame Number | 0 | 1 | 2 | 3 | 4 | 5 | 6 | 7 | 8 | 9 |
|---|---|---|---|---|---|---|---|---|---|---|
| Users/sent signatures | 1 2 3 | 4 | | | | | | | | |
| Acknowledged user | | 1 | 2 | 3 | 4 | | | | | |
| User sending RACH | | | 1 | 1 | 2 3 | 2 3 | 4 | 4 | | |

**Figure 9: Example of sub-frames occupancy for configuration 2 in 3GPP**

| sub-frame Number | 0 | 1 | 2 | 3 | 4 | 5 | 6 | 7 | 8 | 9 |
|---|---|---|---|---|---|---|---|---|---|---|
| Users sending on UpPCH | 1 2 3 | | | 4 | 5 | | | | | |
| Acknowledged user | | 1 | 2 | 3 | 4 | 5 | | | | |
| User sending RACH | | | 1 | 1 | 2 | 2 | 4 5 | 4 5 | | |

**Figure 10: Example of sub-frames occupancy for configuration 3 in 3GPP**

| Sub-frame Number | 0 | 1 | 2 | 3 | 4 | 5 | 6 | 7 | 8 | 9 |
|---|---|---|---|---|---|---|---|---|---|---|
| Users sending on UpPCH | 1 2 3 | | 4 | | 5 | | | | | |
| Acknowledged user | | 1 | 2 | 3 | 4 | 5 | 5 | | | |
| User sending RACH | | | 1 | 1 | 2 | 2 | 4 5 | 4 5 | | |

## Figure 11: Example of sub-frames occupancy for configuration 4 in 3GPP

| sub-frame Number | 0 | 1 | 2 | 3 | 4 | 5 | 6 | 7 | 8 | 9 |
|---|---|---|---|---|---|---|---|---|---|---|
| Users sending on UpPCH | 1 2 3 | | | | 4 5 | | | | | |
| Acknowledged user | | 1 | 2 | 3 | | 4 | 5 | | | |
| User sending RACH | | | 1 | 1 2 | 2 | | 4 | 4 5 | 5 | |

## Figure 12: Example of sub-frames occupancy for configuration 5 in 3GPP

| sub-frame Number | 0 | 1 | 2 | 3 | 4 | 5 | 6 | 7 | 8 | 9 |
|---|---|---|---|---|---|---|---|---|---|---|
| Users sending on UpPCH | 1 2 3 | | | | 4 5 | | | | | |
| Acknowledged user | | 1 | 2 | 3 | | 4 | 5 | | | |
| User sending RACH | | | 1 | 1 | 2 | 2 | 4 | 4 | 5 | 5 |

**European Patent Office**

## EUROPEAN SEARCH REPORT

Application Number

EP 01 83 0012

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | "3G TR 25.928 V1.1.0; 3rd Generation Partnership Project (3GPP); Technical Specification Group (TSG); Radio Access Network (RAN); 1.28 Mcps functionality for UTRA TDD Physical Layer" 3GPP, 'Online! July 2000 (2000-07), pages 1-7-81,82, XP002170077 Retrieved from the Internet: <URL:http://www.3gpp.org/ftp/Specs/2000-12/Drafts/25_series/> 'retrieved on 2001-06-19! * page 81, line 8 - page 82, last line * | 1-6 | H04Q7/38 H04L12/28 |
| A | TSG-RAN WORKING GROUP 1: "Random Access procedures for low chip rate TDD option" 3GPP, 'Online! April 2000 (2000-04), pages 1-2, XP002170078 Retrieved from the Internet: <URL:www.3gpp.org/ftp/tsg_ran/WG1_RL1/TSGR1_12/Docs/PDFs/R1-00-0495.pdf> 'retrieved on 2001-06-19! * the whole document * | 1-6 | |
| | | | **TECHNICAL FIELDS SEARCHED** (Int.Cl.7) H04Q H04L H04B |

The present search report has been drawn up for all claims

| Place of search | Date of completion of the search | Examiner |
|---|---|---|
| THE HAGUE | 19 June 2001 | Baas, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)